# DEMANDE DE BREVET EUROPEEN

(11) **EP 0 925 833 A1**
(43) Date de publication de la demande: **30.06.1999**
(21) Numéro de dépôt: 98403226.8
(22) Date de dépôt: 18.12.1998
(51) Int. Cl.: B01J 49/00, C02F 1/42, B01F 1/00

(54) **Procédé et dispositif de production de saumure pour installation d'adoucissement d'eau**

(30) Priorité: 23.12.1997 FR 9716328
(71) Demandeur: Idea Europe, 78310 Coignieres (FR)
(72) Inventeur: Bontemps, Jean-Claude, 91190 Gif sur Yvette (FR); Bourquin, Michel, 78100 Saint Germain en Laye (FR)
(74) Mandataire: Gorrée, Jean-Michel

(57) **Abrégé**

Pour produire de la saumure destinée à régénérer une résine échangeuse d'ions dans une installation d'aboucissement d'eau, un dispositif selon l'invention comprend : un bac (1) muni d'un plancher perméable (3) situé au-dessus du fond (4) du bac et propre à supporter une masse de sel ; un circuit (6-10) de prélèvement de la saumure dont l'orifice (10) se situe au voisinage du fond du bac ; un circuit (16,17) d'injection d'eau se terminant par au moins une buse de projection d'eau située au-dessus du plancher (3) de manière que l'eau sous pression soit projetée au sein de la masse de sel surmontant le plancher (3).

## Description

La présente invention concerne des perfectionnements apportés à la production de saumure destinée à régénérer une résine échangeuse d'ions dans une installation d'adoucissement d'eau, comprenant :
- un bac muni d'un plancher perméable situé au-dessus du fond du bac et propre à supporter une masse de sel, et
- un circuit de prélèvement de la saumure dont l'orifice se situe au voisinage du fond du bac.

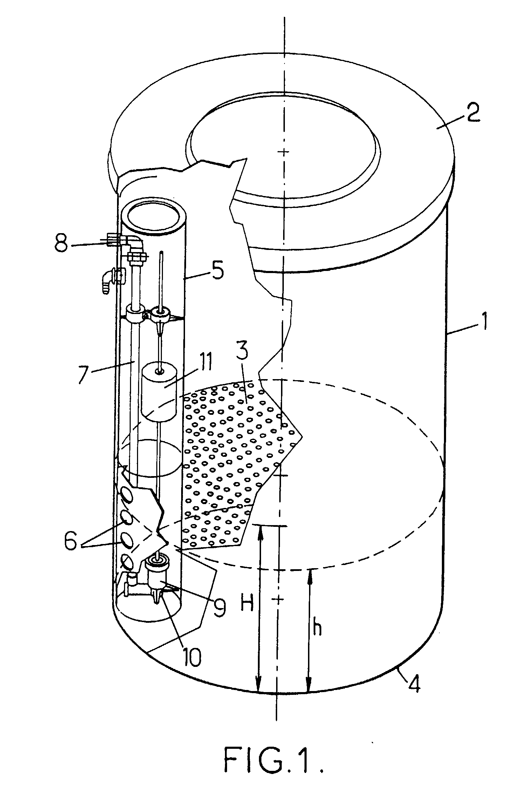

Dans un dispositif connu illustré à la figure 1, un bac 1, fermé supérieurement par un couvercle amovible 2, comporte un plancher perforé 3 disposé à une hauteur h prédéterminée au-dessus du fond 4 du bac. La masse de sel (non montrée), introduite par le haut, repose sur le plancher perforé 3 qu'elle surmonte en s'étendant approximativement jusqu'en haut du bac.

Latéralement à proximité de la paroi latérale du bac est disposé un tube protecteur s'étendant verticalement approximativement sur toute la hauteur du bac 1 et muni à son extrémité inférieure d'ouvertures 6 formant crépine débouchant approximativement entre le fond 4 du bac et le plancher perforé 3. Dans le tube protecteur 5 s'étend un conduit 7 muni, supérieurement, d'un raccord 8 de liaison avec un circuit extérieur (non montré) et, inférieurement, d'un clapet d'obturation 9 commandant l'ouverture ou la fermeture d'un orifice 10 de communication avec le volume intérieur du bac 1. Le clapet 9 est commandé par un système à flotteur 11.

Le conduit 7 et ses accessoires sert à l'ensemble du fonctionnement du bac, c'est-à-dire aussi bien pour l'alimentation en eau claire que pour l'extraction de la saumure.

Le fonctionnement s'effectue comme suit. Le bac étant chargé en sel, de l'eau claire est amenée au conduit 7 par un système de régulation extérieur et le remplissage du bac 1 en eau claire, à travers l'orifice 10, se poursuit jusqu'à atteindre une hauteur H au-dessus du fond 4 prédéterminée par le flotteur 11 qui ferme alors le clapet 9 pour interrompre l'alimentation en eau. Dans ces conditions, l'eau baigne un volume de la masse de sel ayant une hauteur (H-h). Le sel se dissout dans l'eau et une circulation par variation des densités s'établit au sein de l'ensemble du volume liquide : l'eau située au-dessus du plancher perforé 5, chargée en sel, prend une densité plus élevée et descend vers le fond du bac, tandis que l'eau voisine du fond, non encore chargée en sel et plus légère, remonte au-dessus du plancher perforé où elle se charge en sel.

Bien que donnant entièrement satisfaction quant à sa structure et à la qualité de formation de la saumure, ce dispositif connu présente toutefois un inconvénient majeur qui réside dans la durée excessive (de l'ordre de 6 heures) de formation d'un volume d'eau saturée en sel (saumure). Cette durée importante est due, essentiellement, au mode de mise en contact de l'eau claire et du sel, qui s'effectue par simple barbotage et par circulation interne densitaire des courants liquides.

Or, la nécessité d'interrompre, régulièrement et pendant une longue durée, le fonctionnement de l'installation d'adoucissement d'eau pour procéder à la régénération de la résine échangeuse d'ions à l'aide de saumure se révèle inacceptable en pratique dans le cas d'une demande permanente, même discontinue, en eau adoucie. Pour remédier à cet inconvénient, il est donc courant de mettre en oeuvre deux, voire trois adoucisseurs branchés en parallèle et fonctionnant séquentiellement : l'un est en phase de régénération, pendant que l'autre est en phase de production d'eau adoucie.

Toutefois, dans une telle installation chaque adoucisseur est équipé de son propre dispositif de production de saumure. Cette multiplication des dispositifs entraîne un coût élevé de l'ensemble ainsi qu'un encombrement important.

Ainsi, il existe actuellement une demande pressante pour un dispositif de production de saumure capable de fournir une saumure saturée dans un laps de temps beaucoup plus court d'actuellement, et qui soit ainsi capable d'alimenter en saumure successivement tous les adoucisseurs d'une installation, tout en restant aussi peu encombrant que possible et d'un prix de revient aussi faible que possible.

A ces fins, l'invention propose, selon un premier de ses aspects, un procédé de production de saumure destinée à régénérer une résine échangeuse d'ions dans une installation d'adoucissement d'eau telle qu'indiquée au préambule, procédé qui se caractérise en ce qu'on injecte de l'eau sous pression au sein de la masse de sel au-dessus du plancher, ce grâce à quoi le jet d'eau brasse la masse de sel et l'eau projetée se charge en sel de sorte que la saumure récupérée au fond du bac possède sensiblement sa teneur maximale en sel.

De préférence, on injecte l'eau dans la masse de sel de façon approximativement horizontale, et avantageusement on l'injecte dans une zone angulaire maximale autour d'un point d'injection. Dans un mode de mise en oeuvre préféré, on injecte l'eau depuis un point situé approximativement vers la périphérie du bac et l'injection se fait sous un angle d'au moins 200°, voire 250°.

Le procédé conforme à l'invention conduit à la formation quasi instantanée d'une saumure saturée, grâce à la combinaison d'une injection de l'eau au sein de la masse de sel et d'un brassage du sel sous l'action mécanique du jet d'eau : chaque goutte d'eau projetée se trouve immédiatement en contact avec du sel en quantité largement suffisante pour que la goutte d'eau se sature instantanément en sel ; en outre l'eau étant projetée sous pression même faible, brasse mécaniquement le sel, ce qui améliore et accélère sa dissolution. Ensuite, l'eau déjà chargée en sel s'écoule à travers le bas de la masse de sel en finissant de se saturer et tombe, à travers le plancher perforé, au fond du bac.

En conséquence, la formation de la saumure ne s'effectue plus par simple barbotage statique et convectif, mais par une action dynamique qui conduit à une accélération très importante d'obtention d'un volume donné de saumure (par exemple de l'ordre d'une dizaine de minutes, en lieu et place des 6 heures précédemment mentionnées).

On est donc assuré de disposer quasiment en permanence de la quantité de saumure nécessaire à la régénération d'une dose de résine filtrante et il devient par exemple possible de raccourcir les périodes entre cycles de régénération de manière que le recyclage de la résine puisse intervenir avant sa pollution complète.

On notera que la durée très courte de formation de la saumure par mise en oeuvre du procédé de l'invention est approximativement du même ordre de grandeur que la durée du cycle de nettoyage du filtre à résine : il est donc possible de prévoir, par une adaptation appropriée des automatismes, la phase de production de saumure pendant le cycle de nettoyage.

Selon un second aspect, l'invention propose un dispositif de production de saumure destinée à régénérer une résine échangeuse d'ions dans une installation d'adoucissement d'eau telle qu'indiquée au préambule, dispositif qui se caractérise en ce qu'il comporte un circuit d'injection d'eau se terminant par au moins une buse d'injection d'eau située au-dessus du plancher de manière que l'eau sous pression soit projetée, de préférence approximativement horizontalement au sein de la masse de sel surmontant le plancher. Avantageusement, la buse est disposée au-dessus du plancher à une hauteur correspondant sensiblement à la hauteur minimale d'un volume prédéterminé de saumure.

Dans un mode de réalisation préféré qui facilite le montage des composants et permet de réduire le coût de fabrication, le circuit de prélèvement de saumure est disposé à l'intérieur du bac le long de la paroi de celui-ci, notamment le long du tube protecteur précité, soit intérieurement, soit extérieurement à celui-ci, auquel il peut être fixé et le circuit d'injection d'eau est disposé au voisinage de ce circuit de prélèvement de saumure. Dans cette configuration, pour obtenur un contact optimum et rapide de l'eau projetée avec le sel, la buse est conformée pour projeter un jet d'eau de relatiement faible hauteur, mais dans un champ angulaire large, avantageusement d'au moins 200°, voire d'au moins 250°. En pratique, pour être en mesure de couvrir une telle étendue angulaire, on prévoit au moins deux buses adjacentes projetant l'eau dans des champs angulaires juxtaposés.

L'invention sera mieux comprise à la lecture de la description détaillée qui suit de certains modes de réalisation préférés donnés uniquement à titre d'exemples nullement limitatifs. Dans cette description, on se réfère aux dessins annexés sur lesquels :
- la figure 2 est une vue analogue à la figure 1 montrant l'ensemble du dispositif de production de saumure équipé conformément à l'invention ;
- les figures 3A à 3C sont des vues schématiques illustrant les organes adjoints conformément à l'invention montrés dans trois positions fonctionnelles différentes afin d'expliciter le fonctionnement du dispositif de l'invention; et
- la figure 4 est une vue en coupe d'un mode de réalisation pratique de l'agencement des figures 3A à 3C.

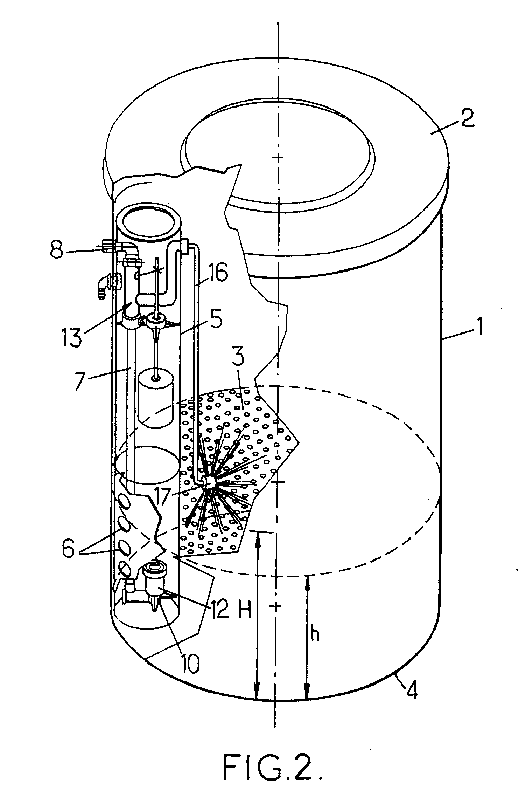

En se référant tout d'abord à la figure 2, le dispositif de production de saumure agencé conformément à l'invention se présente, dans son ensemble, de façon analogue au dispositif antérieur montré à la figure 1, et les mêmes références numériques ont été conservées pour désigner les organes identiques.

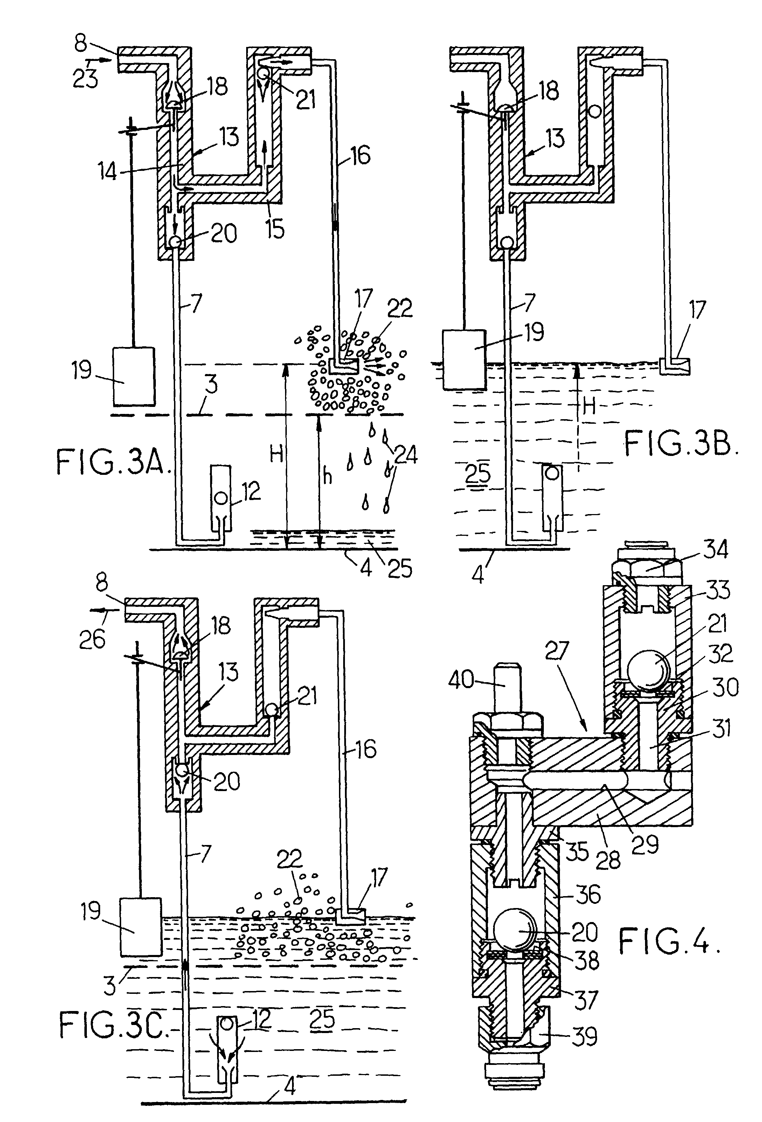

Toutefois, les moyens d'alimentation en eau claire et de prélèvement de la saumure sont modifiés de la manière suivante, référence étant faite simultanément aux figures 2 et 3A.

Le conduit 7 qui s'étend à l'intérieur du tube protecteur 5 est, ici, réservé au prélèvement de la saumure et son orifice inférieur 10 qui s'ouvre à hauteur de la crépine 6 est muni d'un clapet automatique 12 à obturateur flottant évitant l'aspiration d'air.

Entre le raccord 8 et le conduit 7 est disposé un organe sélecteur désigné dans son ensemble par la référence 13 qui comprend une première branche 14 entre le raccord 8 et le conduit 7 et une seconde branche dérivée 15 à laquelle se raccorde un conduit 16 terminée par une ou plusieurs buses 17 de projection d'eau.

Entre le raccord 8 et la seconde branche dérivée 15 est prévu un clapet 18 commandé par un flotteur 19 disposé à l'intérieur du tube protecteur 5 et suivant la variation du niveau de la saumure dans le bac. Le clapet 18 est agencé pour être ouvert lorsqu'il est soulevé verticalement.

Entre la seconde branche dérivée 15 et le conduit 7 est prévu un clapet à flotteur 20 qui est ouvert lorsqu'il est soulevé verticalement et qui est fermé par gravité (clapet à bille par exemple).

La seconde branche dérivée est agencée pour présenter un tronçon sensiblement vertical dans lequel est aménagé un clapet à flotteur 21 qui est ouvert lorsqu'il est soulevé verticalement et qui est fermé par gravité (clapet à bille par exemple).

Le conduit 16 s'étend de préférence le long du tube protecteur 5 auquel il peut être fixé mécaniquement, en étant disposé soit à l'intérieur, soit à l'extérieur (comme illustré à la figure 2) de celui-ci.

La buse 17 fixée à l'extrémité du conduit 16 est à une hauteur, au-dessus du fond 4 du bac 1, qui correspond approximativement à la hauteur H du niveau prédéterminé du volume de saumure à obtenir, ou qui est inférieure à cette hauteur H en restant toutefois sensiblement au-dessus du plancher perméable (perforé) 3 situé à une hauteur h au-dessus du fond. Pour que le fonctionnement du dispositif reste satisfaisant pendant toute la durée d'épuisement de la masse de sel, il est souhaitable que la buse 17 soit positionnée de manière à être encore immergée dans la masse de sel résiduelle qui subsiste au-dessus du plancher perforé 3 lorsqu'une recharge en sel est requise.

La buse 17 est ainsi noyée dans la masse 22 de sel qui surmonte le plancher perforé 3 et elle s'ouvre sensiblement horizontalement de manière à projeter un jet d'eau claire approximativement horizontal, c'est-à-dire un jet à faible divergence verticale, mais très largement ouvert horizontalement, avec un angle d'au moins 200°, voire d'au moins 250°, afin de balayer une étendue angulaire maximale dans la masse de sel.

En pratique, la pulvérisation de l'eau claire sous un angle approprié au sein de la masse de sel pourra être obtenue, si nécessaire, en multipliant le nombre des buses (deux, voire trois buses) avec des orientations horizontales différentes.

Le fonctionnement est le suivant.

Le bac étant vide de saumure (fig. 3A), le flotteur 19 maintient le clapet d'entrée 18 en position d'ouverture. De l'eau claire est alimentée, par un dispositif situé en amont, vers l'entrée 8 (flèche 23) et, fermant le clapet 20 par sa pression, passe dans la seconde branche dérivée 15, soulève le clapet 21 et, par le conduit 16, parvient à la buse 17.

L'eau est, là, pulvérisée comme indiqué plus haut directement au sein de la masse de sel qui est brassée par le jet. Chaque goutte d'eau claire projetée est ainsi assurée d'être immédiatement en contact intime avec le sel et se charge en sel de façon quasi instantanée. En s'écoulant verticalement à travers la masse de sel où elles finissent de se saturer en sel, les gouttes de saumure passent à travers le plancher perforé 3 et tombent (24) au fond du bac pour former un volume de saumure 25 dont le niveau s'élève jusqu'à une hauteur H prédéterminée en baignant alors le bas de la masse de sel, ce qui achève la saturation de la saumure.

Lorsque le niveau de saumure atteint la hauteur prédéterminé H, le flotteur 19 entraîné vers le haut provoque la fermeture du clapet d'entrée 18 qui interrompt l'écoulement de l'eau claire (fig. 3B).

Ensuite, lorsque la saumure 25 ainsi préparée doit être envoyée vers la résine échangeuse d'ions pour la régénération de celle-ci, le dispositif situé en amont commande le pompage. La dépression appliquée à l'orifice 8 provoque le soulèvement du clapet d'entrée 18, puis simultanément plaque le clapet 21 sur son siège en isolant le conduit 16 et la buse 17 et soulève le clapet 20 : le clapet flottant 12 est ouvert, la saumure est aspirée à travers le conduit 7 et évacuée par l'orifice 8 (flèche 26).

L'organe sélecteur 13 peut être réalisé, en partie au moins, sous forme d'une pièce composante unique 27 comme illustré à la figure 4. La pièce 27 comprend un corps allongé 28 traversé par un canal central coaxial 29. A une extrémité (à droite sur la figure 4) est vissé transversalemnt un raccord 30 vertical, tourné vers le haut et muni d'un canal central coaxial 31 ; l'extrémité supérieure du raccord 30 est conformée pour former le siège 32 du clapet à bille 21. Sur le raccord 30 est vissé un manchon 33 formant le logement du clapet à bille 21 et terminé par un raccord 34 pour la liaison avec le conduit 16.

L'autre extrémité du corps 28 est taraudé diamétralement verticalement et reçoit inférieurement un raccord 35 sur lequel est vissé un manchon 36 formant logement pour un clapet à bille 20. A son extrémité inférieure le manchon 36 reçoit par vissage un embout 37 qui est conformé pour constituer le siège 38 du clapet et sur lequel est vissé un raccord 39 de liaison avec le conduit 7.

Dans le taraudage diamétral précité du corps est vissé supérieurement un embout 40 propre à recevoir le corps du clapet 18 commandé par le flotteur 19. Ledit corps avec son clapet et la tige de commande de celui-ci peut être également prémonté sur l'embout 40 de manière telle que l'organe sélecteur 13 constitue une pièce prête à l'emploi.

A titre d'exemple pour fixer les idées, un dispositif de production de saumure actuellement disponible dans le commerce requiert un temps de préparation de la saumure de 6 à 8 heures, avec un titre de 40°, le débit de l'installation étant de 10 m³/h, le pouvoir d'échange de la résine étant de 5,5°/m³ ; dans ces conditions, la capacité de l'adoucisseur est de 80 m³, le volume de résine est d'environ 600 litres, le corps de l'adoucisseur ayant un diamètre de l'ordre de 920 mm.

Dans les mêmes conditions, l'invention ramène le temps de préparation de la saumure à une valeur négligeable (environ 10 mn), et l'intervalle entre deux régénérations peut être abaissé à environ 2 heures (c'est-à-dire 90 mn de régénération et 30 mn de sécurité) ; la capacité de l'adoucisseur peut être abaissé à environ 20 m³, le volume de résine être ramené à environ 150 litres, et le diamètre du corps de l'adoucisseur être réduit à environ 450 mm. Ainsi, outre que le volume de résine devient environ quatre fois moindre, la taille du corps de l'échangeur est notablement réduit, ce qui restreint l'emprise au sol et le coût.

## Revendications

1. Procédé de production de saumure destinée à régénérer une résine échangeuse d'ions dans une installation d'adoucissement d'eau, comprenant :
- un bac (1) muni d'un plancher perméable (3) situé au-dessus du fond du bac et propre à supporter une masse de sel, et
- un circuit (6-10) de prélèvement de la saumure dont l'orifice se situe au voisinage du fond (4) du bac,
caractérisé en ce qu'on injecte de l'eau sous pression au sein de la masse de sel au-dessus du plancher, ce grâce à quoi le jet d'eau brasse la masse de sel et l'eau projetée se charge en sel de sorte que la saumure récupérée au fond du bac possède sensiblement sa teneur maximale en sel.

2. Procédé selon la revendication 1, caractérisé en ce qu'on injecte l'eau dans la masse de sel de façon approximativement horizontale.

3. Procédé selon la revendication 2, caractérisé en ce qu'on injecte l'eau dans la masse de sel dans une zone angulaire maximale autour d'un joint d'injection.

4. Procédé selon la revendication 3, caractérisé en ce qu'on injecte l'eau depuis un joint situé approximativement vers la périphérie du bac et en ce que l'injection se fait sous un angle d'au mons 200°.

5. Dispositif de production de saumure destinée à régénérer une résine échangeuse d'ions dans une installation d'aboucissement d'eau, comprenant :
- un bac (1) muni d'un plancher perméable (3) situé au-dessus du fond (4) du bac et propre à supporter une masse de sel, et
- un circuit (6-10) de prélèvement de la saumure dont l'orifice (10) se situe au voisinage du fond du bac,
caractérisé en ce qu'il comporte en outre un circuit (16,17) d'injection d'eau se terminant par au moins une buse de projection d'eau située au-dessus du plancher (3) de manière que l'eau sous pression soit projetée au sein de la masse de sel surmontant le plancher (3).

6. Dispositif selon la revendication 5, caractérisé en ce que la buse (17) est agencée pour projeter un jet d'eau approximativement horizontal.

7. Dispositif selon la revendication 5 ou 6, caractérisé en ce que la buse est disposée au-dessus du plancher (3) à une hauteur correspondant sensiblement à la hauteur minimale (h) d'un volume prédéterminée de saumure.

8. Dispositif selon l'une quelconque des revendications 5 à 7, dans lequel le circuit de prélèvement de saumure est disposé à l'intérieur du bac (1) le long de la paroi de celui-ci, caractérisé en ce que le circuit d'injection d'eau (16,17) est disposé au voisinage de ce circuit de prélèvement de saumure.

9. Dispositif selon la revendication 7, caractérisé en ce que la buse (17) est conformée pour projeter un jet d'eau de relativement faible hauteur, mais dans un champ angulaire large, notamment d'au moins 200°.

10. Dispositif selon l'une quelconque des revendications 5 à 9, caractérisé en ce qu'il comporte au moins deux buses (17) adjacentes projetant l'eau dans des champs angulaires juxtaposés.
